# EUROPEAN PATENT SPECIFICATION

(11) **EP 1 868 474 B1**
(45) Date of publication and mention of the grant of the patent: **01.09.2010**
(21) Application number: 06722878.3
(22) Date of filing: 31.03.2006
(51) Int. Cl.: A47J 37/06

(54) **A FOOD OR BEVERAGE PREPARING APPARATUS**
VORRICHTUNG ZUR ZUBEREITUNG VON NAHRUNGSMITTELN ODER GETRÄNKEN
DISPOSITIF DE PREPARATION D'ALIMENT OU DE BOISSON

(30) Priority: 01.04.2005 DK 200500457
(43) Date of publication of application: 26.12.2007
(73) Proprietor: Witt Hvidevarer A/S, 7400 Herning (DK)
(72) Inventor: KEMPEL, Allan, Witt, DK-7400 Herning (DK)
(74) Representative: Inspicos A/S
(86) International application number: PCT/DK2006/000186
(87) International publication number: WO 2006/102903

(56) References cited:
- WO-A-92/17102
- GB-A- 783 533
- US-A- 4 577 092

## Description

The present invention relates to a food or beverage preparing apparatus having pivotably mounted upper part comprising one or more rod-shaped heating elements.

### BACKGROUND OF THE INVENTION

Various types of electrical barbeques have been suggested in the patent literature over the yeas. A majority of these barbeques are stationary in the sense that the part of the barbeque housing the electrical heating element is fixed in relation to the part of the barbeque adapted to fixate the barbeque - for example to a wall.

However, GB 783,533 discloses a barbeque where the part of the barbeque housing the heating element is pivotably mounted in relation to that part of the barbeque adapted to fixate the barbeque.

GB 783,533 discloses an electrical barbeque having a single sinuous electric heater of the tubular sheathed type. The heater is mounted in a pivotably mounted top part which can be folded down when the barbeque is not in use. The electrical heater is of a flat rectangular shape.

The barbeque is releasably locked in the horizontal or vertical position, and current is automatically cut off when the top part of the barbeque is folded down. The heater may be supported in a rectangular frame, the longitudinal side members of which are apertured to receive the ends of loops of the heater.

It is a disadvantage of the electrical barbeque suggested in GB 783,533 that the heat radiation from the heater is difficult to control due to the rather complicated shape of the sinuous heater. Thus, the heat generated in the barbeque suggested in GB 783,533 will tend to spread in essentially all directions causing the efficiency of the barbeque to decrease accordingly. Also, kitchen equipment neighboring the barbeque can be damaged due to this uncontrolled radiation of heat from the barbeque.

It is an object of the present invention to provide an electrical kitchen device which takes up minimum space when it is not in use.

It is a further object of the present invention to provide an electrical barbeque where the generated heat is effectively projected towards a cocking area thereby increasing the efficiency of the barbeque.

It is a still further object of the present invention to provide an electrical barbeque where the amount of heat spread to the exterior of the barbeque is significantly reduced.

### SUMMARY OF THE INVENTION

The above-mentioned objects are complied with by providing, in a first aspect, a food or beverage preparing apparatus comprising a base part and a, in relation thereto, pivotably mounted upper part, the pivotably mounted upper part comprising one or more rod-shaped heating elements each defining a single axial direction, the pivotably mounted upper part further comprising electrically driven air ventilation means for securing proper air ventilation in the pivotably mounted upper part.

The food or beverage preparing apparatus according to the present invention is adapted to be mounted on a substantially vertical wall by fixating the base part to said wall. The base part may be arranged to allow fixation of the apparatus to a substantially vertical wall by providing through-going holes in the base part, which may take the form of a plate. Fixation may also be provided by providing some sort of support mechanism, such as feet or stands, attached to the base part. The feet or stands may be arranged to be positioned on for example a table so that the food or beverage preparing apparatus may be positioned on a table, such as a kitchen table.

The one or more rod-shaped heating elements may be electrical heating elements having electrical connections positioned at or near the ends of the rods. Preferably, the food or beverage preparing apparatus comprises a first and a second rod-shaped heating element. The first and second rod-shaped heating elements may be arranged in an electrically independent manner so that heat provided by the first and second heating elements may be controlled in an independent manner. Thus, the amount of electrical power provided to the first and second rod-shaped heating elements may be controlled independently.

The first and second rod-shaped heating elements may be arranged in a substantial parallel manner. Preferably, the first and second rod-shaped heating elements are arranged essentially perpendicular to the base part.

In order to control electrical power provided to the heating elements the food or beverage preparing apparatus may further comprise an electronic control circuit arranged to supply a substantially equal amount of electrical power to the first and second rod-shaped heating elements over a predetermined period of time. Alternatively, the electronic control circuit may be adapted to independently supply electrical power to the first and second rod-shaped heating elements.

The electronic control circuit may include a control mechanism that ensures that electrical current can only be passed through the heating element(s) when the pivotably mounted upper part is in its substantially horizontal position. In this way it is avoided that electrical current, by mistake, may be provided to the heating element(s) when the upper part is in its substantially vertical position.

The food or beverage preparing apparatus may further comprise a heat reflector arranged to project heat from the one or more rod-shaped heating elements towards an associated grill pan when said grill pan is positioned in the apparatus. Preferably, the heat reflector is arranged in the pivotably mounted upper part. Thus, the heat reflector may project heat generated by the heating elements in the direction of the grill pan thereby ensuring an equal heat distribution across a majority of the grill pan. The heat reflector also ensures that heat is not projected to regions outside the barbeque.

In one embodiment the food or beverage preparing apparatus according to the present invention comprises four rod-shaped heating elements and a heat reflector comprising a first and a second reflector zone. The first reflector zone is arranged to project heat from a first pair of heating elements towards an associated grill pan whereas the second reflector zone is arranged to project heat from a second pair of heating elements towards the associated grill pan. An electronic control module ensures that heat generated by the two zones may be controlled independently of each other.

The pivotably mounted upper part may be adapted to be positioned in a substantially horizontal position when the food or beverage is being prepared. Also, the pivotably mounted upper part may adapted to be positioned in a substantially vertical position when the apparatus is not in use.

The food or beverage preparing apparatus may further comprise a pivotably mounted lower part being adapted to be positioned in a substantially horizontal position when the food or beverage is being prepared. The pivotably mounted lower part may be adapted to be positioned in a substantially vertical position when the apparatus is not in use. The exterior surfaces of the pivotably mounted upper and lower parts are preferably made of stainless steel but other material may also be applied.

The pivotably mounted lower part may be adapted cover at least part of the pivotably mounted upper part when said upper part is in a substantially vertical position and the apparatus is not in use. Preferably, the pivotably mounted lower part covers a majority of the upper part when said upper part is in a substantially vertical position and the apparatus is not in use

The pivotably mounted upper part may comprise a pair of independent and user operable locking means, each locking means being arranged to be operated single-handedly.

The food or beverage preparing apparatus according to the first aspect of the present invention may further comprise a plurality of horizontally arranged groves or ledges arranged in the base part or in holders attached thereto, the plurality of groves or ledges being adapted to support an associated grill pan or grill grid. The plurality of horizontally arranged groves or ledges may be arranged in a vertical arrangement relative to each other. At least a number of the plurality of horizontally arranged groves or ledges may be arranged in a first and a second side portion of the base part or in a first and a second holder attached to the base part. Even further, at least a number of the plurality of horizontally arranged groves or ledges may be arranged in a center portion of the base part, the center portion connecting the first and second side portions of the base part. The first and second side portions may be oriented in a substantially perpendicular arrangement relative to the center portion of the base part. The center, the first side and the second side portions are preferably made of stainless steel but other material may also be applied.

As already mentioned the pivotably mounted upper part comprises air ventilation means for securing proper air ventilation in the pivotably mounted upper part. The air ventilation means may comprise one or more electrically driven fans. By effectively cooling the upper part it may be avoided that the user of the apparatus burns his or hers skin when operating the apparatus. In order to achieve effective cooling of especially a cover of the pivotably mounted upper part one or more air guides may be provided inside the upper part. Also, one or more openings may be arranged in an exterior surface part of the pivotably mounted upper part in order to allow air to flow in and out of the pivotably mounted upper part.

### BRIEF DESCRIPTION OF THE DRAWINGS

The present invention will now be explained in further details with reference to the accompanying figures wherein
Fig. 1 shows a barbeque from a front perspective,
Fig. 2 shows a closed and a partly opened barbeque,
Fig. 3 shows a partly opened barbeque,
Fig. 4 shows a heat reflector and four heating element,
Fig. 5 shows a curved portion of a heat reflector, and
Fig. 6 shows a locking arrangement.

While the invention is susceptible to various modifications and alternative forms, specific embodiments have been shown by way of example in the drawings and will be described in detail herein. It should be understood, however, that the invention is not intended to be limited to the particular forms disclosed. Rather, the invention is to cover all modifications, equivalents, and alternatives falling within the scope of the invention as defined by the appended claims.

### DETAILED DESCRIPTION OF THE INVENTION

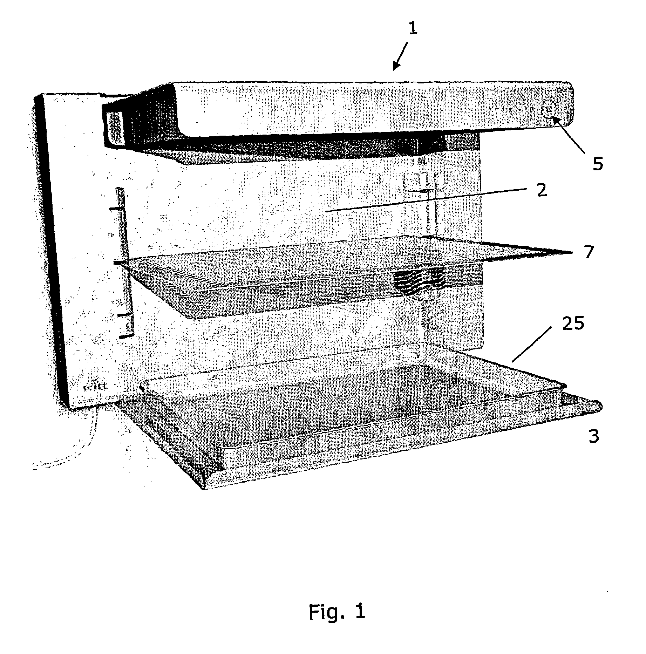

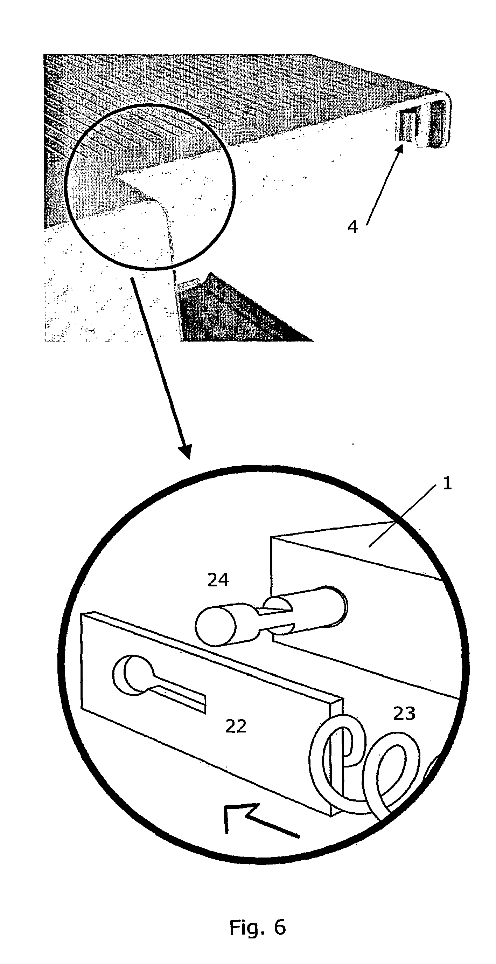

Fig. 1 shows a first embodiment of the present invention. As seen the first embodiment is implemented as an electrical barbeque. The barbeque comprises a pivotably mounted upper part 1, a base part 2 and a pivotably lower part 3. The upper 1 and lower 2 parts are adapted to be positioned in a substantially horizontal position when the barbeque is in use. The upper part 1 comprises a pair of hand-grips 4 (see Fig. 6) for activating a mechanical locking mechanism which allows the upper part to be positioned in the substantially horizontal position. When the upper part is in the substantially horizontal position and the hand-grips 4 are activated the locking mechanism is released and the upper part 1 is allowed to be swung into a substantially vertical position. The upper part 1 is pivoted around a pair of hinges.

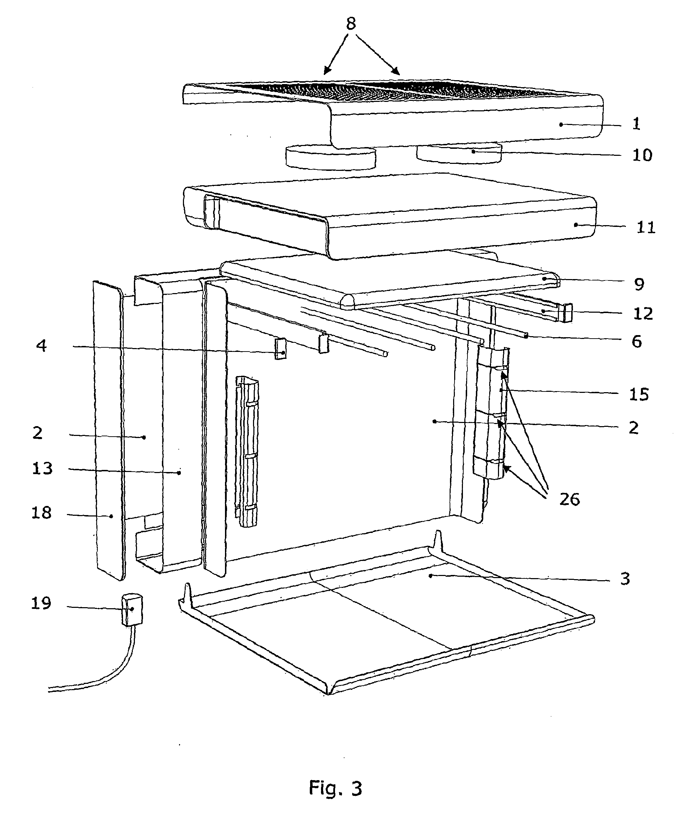

The upper part 1 further comprises a switch or a contact 5 and optionally a visual indicator. The switch/contact is adapted to connect and disconnect the supply of electrical current to one or more electrical heating elements (reference numeral 6 in Fig. 3) mounted in the upper part 1. When the heating element(s) of the barbeque is switched on, food or beverage may be positioned on the grill pan 7. Alternatively, the switch 5 can also be configured to set the heat of the barbeque by having more than just two positions (on and off). Alternatively, the heat can be set by a separate control mechanism so that the heat can be varied continuously over a given temperature range.

In one embodiment of the present invention the switch/contact activates a timer so that when the switch/contact is activated all heating elements are switched on a predetermined period of time, such as for example 6-8 seconds. After this period of time the heating elements are automatically switched off. The barbeque can also be switched off by activating the switch/contact within this period. If the switch/contact is activated twice (one activation being followed by another activation shortly after) the switch-on time of the heating elements is doubled. In this way the switch-on time of the heating elements can be varied by simply activating the switch/contact an appropriate number of times.

In a more advantage set-up the barbeque can be programmed to provide a different amount of electrical power to each of the heating elements whereby the temperature across the grill pan can be varied accordingly. In this way a high temperature can be applied to food positioned on one region of the grill pan, whereas a lower temperature can be applied to food positioned on another region of the grill pan.

The grill pan 9 engages a horizontally arranged grove provided in the base part 2. As seen a plurality of horizontally arranged groves are provided above each other. In this way the grill pan 9 may be positioned at various distances from the upper part 1, and thereby at various distances from the heating element(s) 6 mounted in the upper part 1. An optional visual indicator may indicate whether the barbeque is switched on or off. If the visual indicator is lighting the barbeque is on. If the visual indicator is off no current is provided to the heating element(s) 6.

The lower part 3 is arranged to support a reservoir 25. The reservoir 25 typically contains cold water for cooling dripping cocking fat from food positioned on the grill pan 7. By cooling the cocking fat from the food the amounts of cocking odour and the smell of cocking are significantly reduced. Thus, by cooling the dripping cocking fat in an effective manner burning fat on the lower part 3 can be completely avoided. The cooling of dripping cocking fat may also be established by other means, such as ensuring that the lower part 3 is kept at a sufficiently low temperature.

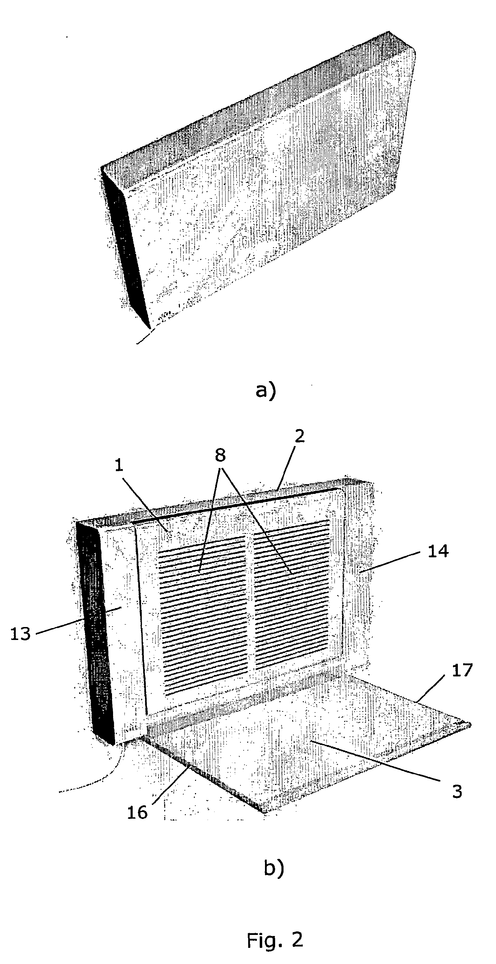

In Figs. 2 and 3 the barbeque according to the present invention is depicted in a closed state and in a partly opened state, respectively. By partly opened state is meant that only the pivotably mounted lower part 3 has been swung into its substantially horizontal position.

The hand-grips 4 are operatively connected to a switch, such as a micro switch, in such a way that current supplied to the heating element(s) 6 is disconnected if the hand-grips 4 are activated while the upper part 1 is in its substantially horizontal position. This avoids that current is provided to the heating element(s) 6 while the upper part 1 is not positioned in its substantially horizontal position.

In order to reduce the exterior surface temperature of the upper part 1 two electrical driven fans (not shown) have been mounted in the upper part 1. These two fans ensure that the temperature of the cover of the upper part 1 never exceeds a temperature capable of burning the skin of the user of the barbeque. As seen in Fig. 2b two air outlets 8 are arranged in the exterior surface of the upper part 1. Each of these air outlets are operatively coupled to or connected to a number of air guides (not shown) inside the upper part 1. By having a proper arrangements of fans, air guides and air outlets heat may be led away from the exterior surface part of the upper part 1 whereby the risk of getting burns is significantly reduced.

Still referring to Fig. 2 it is seen that the pivotably mounted upper part 1 is hinged between the two side portions 13, 14 of the base part 2. Thus, when the upper part 1 is in its substantially vertical position the upper part 1 is essentially positioned between the two side portions 13, 14. The pivotably mounted lower potion 3 is also hinged between the side portions 13, 14. When both the upper part 1 and the lower part 3 are in their substantially vertical positions the lower part 3 covers most of the upper part 1. The lower part 3 has two side portions 16, 17. Each of these side portions 16, 17 is arranged to fit within a front portion of the side portions 13, 14 of the base part 2.

It should be noted that the pivotably mounted lower part 3 is optionally and may thus be omitted. Thus, the barbeque may be constituted only by the base part 2 and the pivotably mounted upper part 1 with one or more rod-shaped heating elements arranged therein.

Fig. 3 shows the barbeque according to the first embodiment from another perspective. In Fig. 3 the four heating elements 6 are clearly seen. The heating elements are positioned relative to a heat reflector 9 to ensure that maximum heat is protected onto the grill pan 7 (not shown in Fig. 3). The heat reflector 9 assists the heating elements 6 in projecting heat from the heating elements 6 in the direction of the grill pan 7 in a homogeneous manner so as to obtain an essentially constant temperature across the grill pan 7. The upper part of the barbeque also contains two air fans 10 which ensure proper air circulation around the barbeque. The air fans 10, which are electrically driven, also ensure that the outer temperature of the upper part 1 stays at reasonable temperatures. The number of air fans can be different from four. For example, the number of heating elements is increased, for example doubled to eight, the number of air fans must be increased accordingly. An air guiding arrangement 11 ensure the proper air circulation in both the upper part 1 and in the near region around the barbeque.

In order to lock the upper part 1 in its horizontal position a pair of slidingly arranged release arms 12 are provided along the side portions of the upper part. The release arms 12 are activated by displacing knob 4 in an outgoing direction whereby the upper part 1 is released from its fixed relationship with the base part 2. When the upper part is released from this fixed relationship the upper part can be swung from its horizontal position to its vertical position. The release mechanism is depicted in further details in Fig. 6 where a coupling member 22 is mechanically biased by spring member 23 towards the back of the barbeque, When knobs 4 (one on each side of the upper part 1) are activated the coupling members 22 (one on each side of the upper part 1) are brought out of engagement with the coupling rods 24 on each side of the upper part 1 whereby the upper part 1 allowed to be swung to its vertical position.

Grill pans are kept in position by grill pan holders 15 having grooves or indentations 26 for receiving the grill pan arranged therein. Electrical power is provided to the barbeque via a replaceable cord 19.

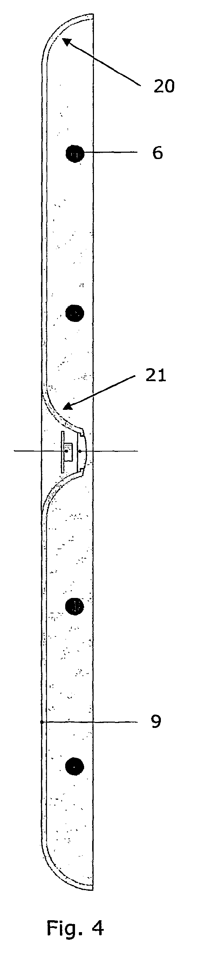

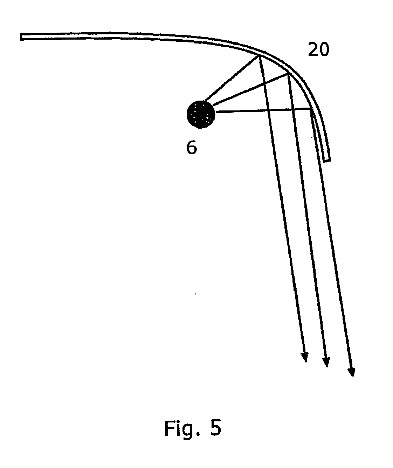

A closer view of the heat reflector 9 is depicted in Fig. 4. The shown heat reflector is intended for use in a barbeque having four rod-shaped heating elements 6. In Fig. 4 the heating elements 6 primarily extend in the direction out of the paper. As seen the heat reflector 9 is composed of two zones each projecting heat from two heating elements 6. Thus, the heat reflector 9 can be considered as a modular system where one module or one zone projects heat generated by a certain number of heating elements 6 which in the shown embodiment equal two heating elements per zone. Obviously the number of heating elements per zone can be varied. Similarly, the number of zones forming the reflector can be varied to match specific demands. The rounded corners 20, 21 terminating each zone of the heat reflector ensure that thermal cross talk between two neighboring zones is minimized. Similarly the rounded corners 20, 21 ensure that heat is not projected to the outside of the barbeque and thereby wasted. The heat projection near a corner 20 is depicted in Fig. 5.

Still referring to Fig. 4 the barbeque further comprises an electronic control circuit for providing electrical power to the rod-shaped heating elements. As already mentioned an equal amount of electrical power can be provided to each of the heating elements over a predetermined period of time. Alternatively, the heating elements can be provided with a different amount of electrical power so that for example two neighboring heating elements reaches different temperatures. Also, the barbeque can be configured so that for example two heating elements within the same zone receive the same amount of electrical power whereas for example two heating elements of a neighboring zone receive a different amount of electrical power. Thus, the heating elements can be controlled independently or they can be grouped in zones the latter being controlled independently.

## Claims

1. A food or beverage preparing apparatus comprising a base part (2) and a, in relation thereto, pivotably mounted upper part (1), the pivotably mounted upper part (1) comprising one or more rod-shaped heating elements (6) each defining a single axial direction, the pivotably mounted upper part (1) further comprising electrically driven air ventilation means (10, 11) for securing proper air ventilation in the pivotably mounted upper part (1).

2. A food or beverage preparing apparatus according to claim 1, wherein the one or more rod-shaped heating elements (6) is/are electrical heating elements.

3. A food or beverage preparing apparatus according to claim 1 or 2, comprising a first and a second rod-shaped heating element (6).

4. A food or beverage preparing apparatus according to claim 3, wherein the first and second rod-shaped heating elements (6) are arranged in an electrically independent manner so that heat provided by the first and second heating elements (6) may be controlled in an independent manner.

5. A food or beverage preparing apparatus according to claim 3 or 4, wherein the first and second rod-shaped heating elements (6) are arranged in a substantial parallel manner, and wherein the first and second rod-shaped heating elements (6) are arranged essentially perpendicular to the base part (2).

6. A food or beverage preparing apparatus according to any of claim 3-5, further comprising an electronic control circuit arranged to supply a substantially equal amount of electrical power to the first and second rod-shaped heating elements (6) over a predetermined period of time.

7. A food or beverage preparing apparatus according to any of claim 3-5, further comprising an electronic control circuit adapted to independently supply electrical power to the first and second rod-shaped heating elements (6).

8. A food or beverage preparing apparatus according to any of the preceding claims, further comprising a heat reflector (9) arranged to project heat from the one or more rod- shaped heating elements (6) towards an associated grill pan when said grill pan is positioned in the apparatus, the heat refiector (9) being arranged in the pivotably mounted upper part (1).

9. A food or beverage preparing apparatus according to any of the preceding claims, comprising four rod-shaped heating elements (6).

10. A food or beverage preparing apparatus according to claim 9, further comprising a heat reflector (9) comprising a first and a second reflector zone, the first reflector zone being arranged to project heat from a first pair of heating elements towards an associated grill pan when said grill pan is positioned in the apparatus, the second reflector zone being arranged to project heat from a second pair of heating elements towards the associated grill pan when said grill pan is positioned in the apparatus.

11. A food or beverage preparing apparatus according to any of the preceding claims, wherein the pivotably mounted upper part (1) is adapted to be positioned in a substantially horizontal position when the food or beverage is being prepared.

12. A food or beverage preparing apparatus according to any of the preceding claims, wherein the pivotably mounted upper part (1) is adapted to be positioned In a substantially vertical position when the apparatus is not in use.

13. A food or beverage preparing apparatus according to any of the preceding claims, wherein the apparatus is adapted to be mounted on a substantially vertical wall by fixating the base part (2) to said wall.

14. A food or beverage preparing apparatus according to any of the preceding claims, further comprising a pivotably mounted lower part (3), wherein the pivotably mounted lower part (3) is adapted to be positioned in a substantially horizontal position when the food or beverage is being prepared.

15. A food or beverage preparing apparatus according to claim 14, wherein the pivotably mounted lower part (3) is adapted to be positioned in a substantially vertical position when the apparatus is not in use.

16. A food or beverage preparing apparatus according to claim 15, wherein the pivotably mounted lower part (3) covers at least part of the pivotably mounted upper part (1) when said upper part (1) is in a substantially vertical position and the apparatus is not in use.

17. A food or beverage preparing apparatus according to any of the preceding claims, wherein the pivotably mounted upper part (1) comprises a pair of independently operable locking means, each locking means being arranged to be operated single-handedly.

## Patentansprüche

1. Essens- oder Getränkezubereitungsvorrichtung mit einem Grundteil (2) und mit einem in Bezug auf dieses schwenkbar angebrachten oberen Teil (1), wobei das schwenkbar angebrachte obere Teil (1) ein oder mehrere stabförmige Heizelemente (6) aufweist, die jeweils eine einzige axiale Richtung festlegen, wobei das schwenkbar angebrachte obere Teil (1) weiterhin elektrisch angetriebene Belüftungsmittel (10, 11) aufweist, um eine angemessene Belüftung in dem schwenkbar angebrachten oberen Teil (1) sicherzustellen.

2. Essens- oder Getränkezubereitungsvorrichtung nach Anspruch 1, bei der das eine oder die mehreren stabförmigen Heizelemente (6) (ein) elektrische(s) Heizelement(e) ist/sind.

3. Essens- oder Getränkezubereitungsvorrichtung nach Anspruch 1 oder 2, die ein erstes und ein zweites stabförmiges Heizelement (6) aufweist.

4. Essens- oder Getränkezubereitungsvorrichtung nach Anspruch 3, bei der die ersten und zweiten stabförmigen Heizelemente (6) voneinander elektrisch unabhängig eingerichtet sind, so dass die von den ersten und zweiten Heizelementen (6) bereitgestellte Wärme unabhängig gesteuert werden kann.

5. Essens- oder Getränkezubereitungsvorrichtung nach Anspruch 3 oder 4, bei der die ersten und zweiten stabförmigen Heizelemente (6) im Wesentlichen parallel angeordnet sind und bei der die ersten und zweiten stabförmigen Heizelemente (6) im Wesentlichen rechtwinklig zu dem Grundteil (2) angeordnet sind.

6. Essens- oder Getränkezubereitungsvorrichtung nach einem der Ansprüche 3-5, die weiterhin einen elektronischen Steuerstromkreis aufweist, der dazu eingerichtet ist, eine im Wesentlichen gleiche Menge elektrischer Energie für die ersten und zweiten stabförmigen Heizelemente (6) über eine vorbestimmte Zeitdauer bereitzustellen.

7. Essens- oder Getränkezubereitungsvorrichtung nach einem der Ansprüche 3-5, die weiterhin einen elektronischen Steuerstromkreis aufweist, der dazu eingerichtet ist, unabhängig elektrische Energie für die ersten und zweiten stabförmigen Heizelemente (6) bereitzustellen.

8. Essens- oder Getränkezubereitungsvorrichtung nach einem der vorangehenden Ansprüche, die weiterhin einen Wärmereflektor (9) aufweist, der dazu eingerichtet ist, Wärme von dem einen oder den mehreren stabförmigen Heizelementen (6) in Richtung einer dazugehörigen Grillpfanne zu werfen, wenn die Grillpfanne in der Vorrichtung angebracht ist, wobei der Wärmereflektor (9) in dem schwenkbar angebrachten oberen Teil (1) angeordnet ist.

9. Essens- oder Getränkezubereitungsvorrichtung nach einem der vorangehenden Ansprüche, die vier stabförmige Heizelemente (6) aufweist.

10. Essens- oder Getränkezubereitungsvorrichtung nach Anspruch 9, die weiterhin einen Wärmereflektor (9) mit einem ersten und mit einem zweiten Reflektorbereich aufweist, wobei der erste Reflektorbereich dazu eingerichtet ist, Wärme von einem ersten Paar Heizelemente in Richtung einer dazugehörigen Grillpfanne zu werfen, wenn die Grillpfanne in der Vorrichtung angebracht ist, und wobei der zweite Reflektorbereich dazu eingerichtet ist, Wärme von einem zweiten Paar Heizelemente in Richtung der dazugehörigen Grillpfanne zu werfen, wenn die Grillpfanne in der Vorrichtung angebracht ist

11. Essens- oder Getränkezubereitungsvorrichtung nach einem der vorangehenden Ansprüche, bei der das schwenkbar angebrachte obere Teil (1) dazu eingerichtet ist, in einer im Wesentlichen horizontalen Stellung angeordnet zu sein, wenn das Essen oder das Getränk zubereitet wird.

12. Essens- oder Getränkezubereitungsvorrichtung nach einem der vorangehenden Ansprüche, bei der das schwenkbar angebrachte obere Teil (1) dazu eingerichtet ist, in einer im Wesentlichen senkrechten Stellung angeordnet zu sein, wenn die Vorrichtung nicht in Betrieb ist.

13. Essens- oder Getränkezubereitungsvorrichtung nach einem der vorangehenden Ansprüche, bei der die Vorrichtung dazu eingerichtet ist, an einer im Wesentlichen senkrechten Wand angebracht zu werden, indem das Grundteil (2) an der Wand befestigt wird.

14. Essens- oder Getränkezubereitungsvorrichtung nach einem der vorangehenden Ansprüche, die weiterhin ein schwenkbar angebrachtes unteres Teil (3) aufweist, wobei das schwenkbar angebrachte untere Teil (3) dazu eingerichtet ist, in einer im Wesentlichen horizontalen Stellung angeordnet zu sein, wenn das Essen oder das Getränk zubereitet wird.

15. Essens- oder Getränkezubereitungsvorrichtung nach Anspruch 14, bei der das schwenkbar angebrachte untere Teil (3) dazu eingerichtet ist, in einer im Wesentlichen senkrechten Stellung angeordnet zu sein, wenn die Vorrichtung nicht in Betrieb ist.

16. Essens- oder Getränkezubereitungsvorrichtung nach Anspruch 15, bei der das schwenkbar angebrachte untere Teil (3) wenigstens einen Teil des schwenkbar angebrachten oberen Teils (1) bedeckt, wenn das obere Teil (1) in einer im Wesentlichen senkrechten Stellung und die Vorrichtung nicht in Betrieb ist.

17. Essens- oder Getränkezubereitungsvorrichtung nach einem der vorangehenden Ansprüche, bei der das schwenkbar angebrachte obere Teil (1) ein Paar unabhängig bedienbare Verriegelungsmittel aufweist, wobei jedes Verriegelungsmittel dazu eingerichtet ist, einhändig bedient zu werden.

## Revendications

1. Un appareil de préparation d'aliment ou de boisson comprenant une partie de base (2) et, en relation avec, une partie supérieure (1) montée pivotante, la partie supérieure (1) montée pivotante comprenant un ou plusieurs éléments de chauffage (6) en forme de tige définissant chacun un seul axe directionnel, la partie supérieure (1) montée pivotante comprenant en outre des moyens de ventilation électriques de conduite d'air (10,11) pour assurer la ventilation d'air appropriée dans la partie supérieure (1) montée pivotante.

2. Un appareil de préparation d'aliment ou de boisson selon la revendication 1, dans lequel l'un ou plusieurs éléments de chauffage (6) en forme de tige est / sont des éléments de chauffage électrique.

3. Un appareil de préparation d'aliment ou de boisson selon la revendication 1 ou 2, comprenant un premier et un second élément chauffant (6) en forme de tige.

4. Un appareil de préparation d'aliment ou de boisson selon la revendication 3, dans lequel les premiers et second éléments de chauffage (6) en forme de tige sont disposés d'une manière indépendante électriquement pour que la chaleur fournie par les premiers et second éléments de chauffage (6) puisse être contrôlés de manière indépendante.

5. Un appareil de préparation d'aliment ou de boisson selon la revendication 3 ou 4, dans lequel les premiers et second éléments de chauffage (6) en forme de tige sont disposés de manière sensiblement parallèle, et dans lequel les premiers et second éléments de chauffage (6) en forme de tige sont pratiquement perpendiculaires à la partie de base (2).

6. Un appareil de préparation d'aliment ou de boisson selon l'une des revendications 3 à 5, comprenant en outre un circuit de commande électronique disposé à fournir une quantité d'énergie électrique sensiblement égale aux premiers et second éléments de chauffage (6) en forme de tige sur une période de temps prédéfinie.

7. Un appareil de préparation d'aliment ou de boisson selon l'une des revendications 3 à 5, comprenant en outre un circuit de commande électronique adapté pour fournir indépendamment une alimentation électrique aux premiers et second éléments de chauffage (6) en forme de tige.

8. Un appareil de préparation d'aliment ou de boisson selon l'une des revendications précédentes, comprenant en outre un réflecteur de chaleur (9) disposé à projeter la chaleur depuis le ou les éléments de chauffage (6) en forme de tige vers une poêle associée lorsque ladite poêle est placée dans l'appareil, le réflecteur de chaleur (9) est disposé dans la partie supérieure montée pivotante (1).

9. Un appareil de préparation d'aliment ou de boisson selon l'une des revendications précédentes, comprenant quatre éléments de chauffage en forme de tige (6).

10. Un appareil de préparation d'aliment ou de boisson selon la revendication 9, comprenant en outre un réflecteur de chaleur (9) comprenant une première et seconde zone de réflexion, la première zone étant agencée pour projeter de la chaleur depuis une première paire d'éléments chauffants vers poêle associée lorsque ladite poêle est placée dans l'appareil, la seconde zone de réflexion étant agencée pour projeter de la chaleur depuis une seconde paire d'éléments chauffants vers la poêle lorsque ladite poêle est placée dans l'appareil.

11. Un appareil de préparation d'aliment ou de boisson selon l'une des revendications précédentes, dans lequel la partie supérieure (1) montée pivotante est conçue pour être placée dans une position sensiblement horizontale lorsque l'aliment ou la boisson est en préparation.

12. Un appareil de préparation d'aliment ou de boisson selon l'une des revendications précédentes, dans lequel la partie supérieure (1) est montée pivotante conçue pour être placée dans une position sensiblement verticale lorsque l'appareil n'est pas utilisé.

13. Un appareil de préparation d'aliment ou de boisson selon l'une des revendications précédentes, dans lequel l'appareil est conçu pour être monté sur une paroi sensiblement verticale par la fixation de la partie de base (2) à ladite paroi.

14. Un appareil de préparation d'aliment ou de boisson selon l'une des revendications précédentes, comprenant en outre une partie inférieure (3) montée pivotante, dans lequel la partie inférieure (3) montée pivotante est conçue pour être placée dans une position sensiblement horizontale lorsque l'aliment ou la boisson est en préparation.

15. Un appareil de préparation d'aliment ou de boisson selon la revendication 14, dans lequel la partie inférieure (3) montée pivotante est conçue pour être placée dans une position sensiblement verticale lorsque l'appareil n'est pas utilisé.

16. Un appareil de préparation d'aliment ou de boisson selon la revendication 15, dans lequel la partie inférieure (3) montée pivotante couvre au moins une partie de la pièce supérieure (1) montée pivotante lorsque la partie supérieure (1) se trouve dans une position sensiblement verticale et que l'appareil n'est pas utilisé.

17. Un appareil de préparation d'aliment ou de boisson selon l'une des revendications précédentes, dans lequel la partie supérieure (1) montée pivotante comprend une paire de moyens de verrouillage actionnable indépendamment, chaque moyen de verrouillage étant agencé pour être utilisé par une seule main.
